# EUROPEAN PATENT SPECIFICATION

(11) **EP 3 223 459 B1**
(45) Date of publication and mention of the grant of the patent: **24.09.2025**
(21) Application number: 15866194.2
(22) Date of filing: 03.12.2015
(51) Int. Cl.: H04L 41/12, H04L 43/0811, H04L 43/10, H04L 41/0803

(54) **METHOD AND SDN DEVICE FOR DETECTING CONNECTIVITY**
VERFAHREN UND SDN-VORRICHTUNG ZUR KONNEKTIVITÄTSKENNUNG
PROCÉDÉ ET SDN DISPOSITIF POUR DÉTECTER UNE CONNECTIVITÉ

(30) Priority: 05.12.2014 CN 201410736365
(43) Date of publication of application: 27.09.2017
(73) Proprietor: Huawei Technologies Co., Ltd., Shenzhen, Guangdong 518129 (CN)
(72) Inventor: YANG, Peilin, Shenzhen Guangdong 518129 (CN); WANG, Zhongyu, Shenzhen Guangdong 518129 (CN)
(74) Representative: Maiwald GmbH
(86) International application number: PCT/CN2015/096365
(87) International publication number: WO 2016/086890

(56) References cited:
- EP-A1- 2 182 693
- EP-A1- 2 765 740
- CN-A- 103 001 887
- CN-A- 103 581 021
- CN-A- 103 765 823
- US-A1- 2013 010 605

## Description

### TECHNICAL FIELD

The present invention relates to the communications field, and in particular, to a method and an apparatus for detecting connectivity.

### BACKGROUND

In a structure of a conventional network, connection between network elements is complex. Connectivity between network elements to be used needs to be detected before service operation is performed. There are multiple manners for detecting connectivity between two network elements, for example, common Bidirectional Forwarding Detection (Bidirectional Forwarding Detection, BFD).

With the change of market requirements and upgrade of the network structure, there emerges a new network architecture: software-defined networking (software-defined networking, SDN). In the SDN network architecture, a control plane and a forwarding plane are separated. A network element used for forwarding, for example, a switch (switch), in the forwarding plane is mainly controlled by using an SDN controller (SDN controller, SNC). The SNC mainly implements interaction of protocols and delivery of a forwarding entry, and the switch is mainly responsible for forwarding.

However, in the SDN network architecture or a hybrid network architecture of the conventional network and the SDN, when a network element is in the SDN, currently there is no method available for effectively detecting link connectivity between the network element and another network element.

EP 2 765 740 A1 describes methods and devices to be used in a first network node for measuring network characteristics using a performance measuring protocol. The therein described methods comprise receiving a message, extracting a network address of a second network node from said message, and storing said network address of said second network node. The therein described methods further comprise setting up a session for measuring network characteristics using said performance measuring protocol between said first network node and said second network node utilizing said network address.

EP 2 182 693 A1 describes a proxy, method and network system for session keep-alive detection, with a view to implementing conversion between different session keep-alive detection mechanisms, performing keep-alive detection on a session group, and reducing message traffic in the session keep-alive detection.

### SUMMARY

To resolve the foregoing technical problem, embodiments of the present invention provide a method and a software-defined networking, SDN, device, for detecting connectivity as defined by the independent claims, to detect connectivity between network elements Further embodiments are provided by the dependent claims.

### GENERAL DESCRIPTION

According to a first aspect, an embodiment of the present invention provides a method for detecting connectivity, including:
transmitting, by an SDN device, a session negotiation packet to a second network element, where the session negotiation packet is used to negotiate a link between the first network element and the second network element, and the first network element is located in an SDN network;
obtaining, by the SDN device, a response message returned by the second network element, to determine that the link is negotiated successfully; and
transmitting, by the SDN device, a heartbeat packet to the second network element, where the heartbeat packet is used to detect connectivity of the link.

In a first possible implementation manner of the first aspect, the SDN device specifically includes the first network element, and before the transmitting, by an SDN device, a session negotiation packet to a second network element, the method further includes:
receiving, by the first network element, first configuration information transmitted by an SNC, where the first configuration information includes location information of the second network element, and the first network element is connected to the SNC; and
the transmitting, by an SDN device, a session negotiation packet to a second network element specifically includes:
   transmitting, by the first network element, a session negotiation packet to the second network element according to the location information.

With reference to the first possible implementation manner of the first aspect, in a second possible implementation manner, the first configuration information further includes data for transmitting the heartbeat packet, where the data includes a transmission interval and/or transmission times of the heartbeat packet; and
the first network element transmits the heartbeat packet to the second network element according to the data in the configuration information.

According to a second aspect, an embodiment of the present invention provides a software-defined networking, SDN, device, for detecting connectivity as described in appended claim 3.

As can be learned from the foregoing technical solution, after an SDN device that is located in an SDN network transmits a session negotiation packet to a second network element to determine that a link between the second network element and the first network element located in the SDN network is negotiated successfully, the SDN device transmits a heartbeat packet to the second network element, so as to effectively detect connectivity of the link. In this case, in an SDN network architecture or a hybrid architecture having an SDN network architecture, link connectivity between a first network element and a second network element in the SDN can also be effectively detected, thereby improving compatibility of the SDN network, and facilitating promotion of the SDN network.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for detecting connectivity according to an embodiment of the present invention;
FIG. 2 is a schematic diagram of signaling for detecting connectivity according to an embodiment of the present invention;
FIG. 3 is a schematic diagram of signaling for detecting connectivity according to an embodiment of the present invention;
FIG. 4 is a schematic diagram of signaling for detecting connectivity according to an embodiment of the present invention;
FIG. 5 is a structural diagram of an apparatus for detecting connectivity according to an embodiment of the present invention;
FIG. 6 is a structural diagram of an apparatus for detecting connectivity according to an embodiment of the present invention; and
FIG. 7 is a schematic structural diagram of hardware in an SDN device according to an embodiment of the present invention.

### DESCRIPTION OF EMBODIMENTS

Conventionally, for a network element located in an SDN network architecture, there is no effective link connectivity detection method available for detecting link connectivity between the network element and another network element. The another network element herein may be a network element that is also located in the SDN network architecture, or may be a network element located in another network architecture. The another network herein may be construed as another network forming a hybrid network architecture with the SDN network architecture. In this case, when a link between network elements is faulty, another network element cannot be effectively and rapidly selected for switchover, reducing the stability of the SDN network architecture or a hybrid network architecture of a conventional network and SDN, and causing poor compatibility of the SDN network architecture and difficulty in promotion of the SDN network as well. Therefore, embodiments of the present invention provide a method and a software-defined networking, SDN, device, for detecting connectivity. After an SDN device that is located in an SDN network transmits a session negotiation packet to a second network element to determine that a link between the second network element and the first network element located in the SDN network is negotiated successfully, the SDN device transmits a heartbeat packet to the second network element, so as to effectively detect connectivity of the link. In this case, in an SDN network architecture or a hybrid architecture having SDN, link connectivity between a first network element and a second network element in the SDN can also be effectively detected, thereby improving compatibility of the SDN network, and facilitating promotion of the SDN network.

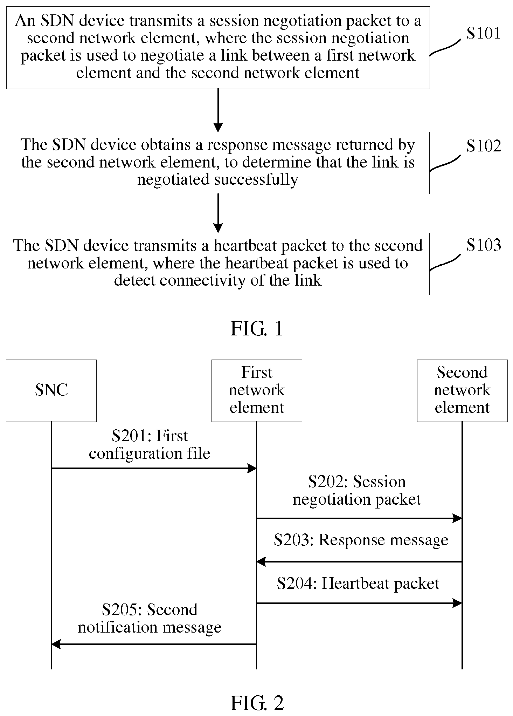

FIG. 1 is a flowchart of a method for detecting connectivity according to an embodiment of the present invention. The method includes the following steps.

S101: An SDN device transmits a session negotiation packet to a second network element, where the session negotiation packet is used to negotiate a link between a first network element and the second network element, and the first network element is located in an SDN network.

For example, the session negotiation packet is transmitted mainly for establishing a detection session between the first network element and the second network element. Establishing a detection session is a precondition for detecting link connectivity.

The first network element herein refers to a network element located in the SDN network, and may be construed as a provider edge (Provider Edge, PE) device or a provider (Provider, P) device. The second network element may be located in the SDN network, or may be not located in the SDN network. This is not limited in the present invention.

S102: The SDN device obtains a response message returned by the second network element, to determine that the link is negotiated successfully.

For example, the response message returned by the second network element specifically refers to a response message returned by the second network element after receiving the session negotiation packet transmitted by the SDN network. When the SDN device receives the response message, it may be generally considered that a detection session has been successfully established for the link between the first network element and the second network element.

S103: The SDN device transmits a heartbeat packet to the second network element, where the heartbeat packet is used to detect connectivity of the link.

For example, the heartbeat packet may be construed as a packet that is continuously transmitted at a particular frequency. During the period of transmitting the heartbeat packet, the connectivity of the link between the first network element and the second network element may be continuously detected by the SDN device.

As can be learned from the foregoing embodiment, after an SDN device that is located in an SDN network transmits a session negotiation packet to a second network element to determine that a link between the second network element and the first network element located in the SDN network is negotiated successfully, the SDN device transmits a heartbeat packet to the second network element, so as to effectively detect connectivity of the link. In this case, in an SDN network architecture or a hybrid architecture having an SDN network architecture, link connectivity between a first network element and a second network element in the SDN can also be effectively detected, thereby improving compatibility of the SDN network, and facilitating promotion of the SDN network.

The SDN device may specifically be different network devices in the SDN network. Several specific possibilities of the SDN device are described in the embodiment of the present invention in detail. The SDN device includes the first network element, and may include an SNC.

FIG. 2. FIG. 2 is a schematic diagram of signaling for detecting connectivity according to an embodiment of the present invention. An SDN network includes an SNC, a first network element and a second network element, where the first network element is connected to the SNC.

S201: The first network element receives first configuration information transmitted by the SNC, where the first configuration information includes location information of the second network element.

For example, the first configuration information can be used to determine a location of a target network element whose connectivity is to be detected, that is, the second network element, in the network.

S202: The first network element transmits a session negotiation packet to the second network element according to the location information.

S203: The first network element obtains a response message returned by the second network element, to determine that the link is negotiated successfully.

S204: The first network element transmits a heartbeat packet to the second network element, where the heartbeat packet is used to detect connectivity of the link.

For example, frequency and duration of the heartbeat packet transmitted by the first network element to the second network element may be set by the SNC. The SNC may transmit, to the first network element by using the first configuration information in S201, data for transmitting the heartbeat packet, where the data includes a transmission interval and/or transmission times of the heartbeat packet. When the first configuration information received by the first network element includes the data, the heartbeat packet may be transmitted to the second network element according to the transmission interval and/or transmission times included in the data.

S205: The first network element transmits a second notification message to the SNC, where the second notification message includes a connectivity result of the link detected by using the heartbeat packet.

For example, by using the heartbeat packet in S204, the first network element may know the connectivity result of the link. In the SDN network, network elements connected to the SNC are mainly controlled by using the SNC, therefore, in this embodiment of the present invention, the connectivity result of the link obtained according to the heartbeat packet may be fed back to the first network element, so that the SNC can better understand related information of each network element, and better perform effective control according to the obtained related information, for example, how to switch when the link has no the connectivity, or whether switchover to the link between the first network element and the second network element is allowed when other links have no connectivity.

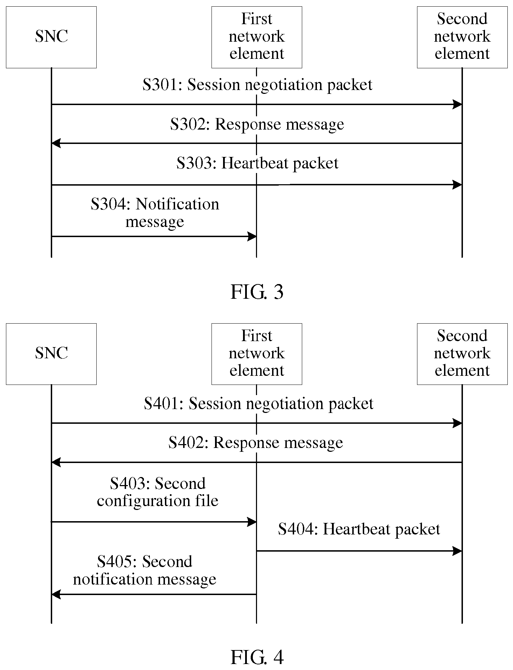

In case the SDN device specifically includes the SNC, refer to FIG. 3. FIG. 3 is a schematic diagram of signaling for detecting connectivity according to an embodiment of the present invention. An SDN network includes an SNC, a first network element and a second network element, where the first network element is connected to the SNC.

S301: The SNC transmits a session negotiation packet to the second network element.

For example, location information of each network element has been acquired by the SNC in advance, and therefore the SNC may transmit the session negotiation packet to the second network element by means of the acquired location information of the second network element.

S302: The SNC obtains a response message returned by the second network element, to determine that the link is negotiated successfully.

S303: The SNC transmits a heartbeat packet to the second network element, where the heartbeat packet is used to detect connectivity of the link.

S304: The SNC transmits a notification message to the first network element, where the notification message includes a connectivity result of the link detected by using the heartbeat packet.

For example, because the connectivity result of the link obtained by the SNC by transmitting the heartbeat packet to the second network element is not known by the first network element, the SNC may inform the first network element of the connectivity result of the link by transmitting the notification message to the first network element.

For the third case, that is, a case in which the SDN device specifically includes the SNC and the first network element, refer to FIG. 4. FIG. 4 is a schematic diagram of signaling for detecting connectivity according to an embodiment of the present invention. An SDN network includes an SNC, a first network element and a second network element, where the first network element is connected to the SNC.

S401: The SNC transmits a session negotiation packet to the second network element.

S402: The SNC obtains a response message returned by the second network element, to determine that the link is negotiated successfully.

S403: The first network element receives second configuration information transmitted by the SNC, where the second configuration information includes location information of the second network element and data for transmitting the heartbeat packet, and the data includes transmission interval and/or transmission times of the heartbeat packet.

For example, in a case in which the SDN device includes the SNC and the first network element, detection of link connectivity between the first network element and the second network element is completed by the SNC and the first network element in coordination. The SNC transmits the session negotiation packet to the second network element to determine that the link between the first network element and the second network element is negotiated successfully. Subsequently, the first network element may transmit the heartbeat packet to the second network element. Both the data for transmitting the heartbeat packet by the first network element to the second network element and address information of the second network element can be obtained by means of the second configuration information.

S404: The first network element transmits the heartbeat packet to the second network element according to the location information and the data, where the heartbeat packet is used to detect connectivity of the link.

S405: The first network element transmits a second notification message to the SNC, where the second notification message includes a connectivity result of the link detected by using the heartbeat packet.

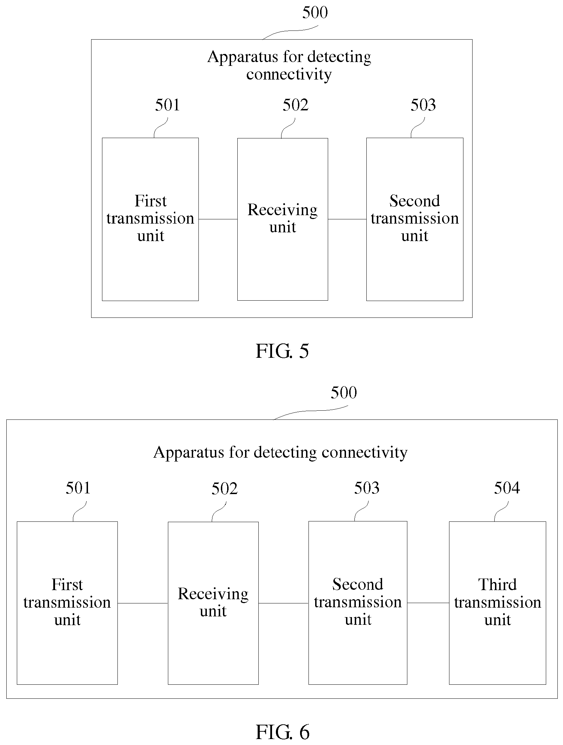

FIG. 5 is a structural diagram of an apparatus for detecting connectivity according to an embodiment of the present invention. The apparatus 500 for detecting connectivity includes:
a first transmission unit 501, configured to transmit a session negotiation packet to a second network element, where the session negotiation packet is used to negotiate a link between a first network element and the second network element, and the first network element is located in an SDN network.

For example, the session negotiation packet is transmitted mainly for establishing a detection session between the first network element and the second network element. Establishing a detection session is a precondition for detecting link connectivity.

The first network element herein refers to a network element in the SDN network, and may be construed as a PE device or a P device. The second network element may be located in the SDN network, or may be not located in the SDN network. This is not limited in the present invention. a receiving unit 502, configured to obtain a response message returned by the second network element, to determine that the link is negotiated successfully.

For example, the response message returned by the second network element specifically refers to a response message returned by the second network element after receiving the session negotiation packet transmitted by the first transmission unit 501. When the receiving unit 502 receives the response message, it may be generally considered that a detection session has been successfully established for the link between the first network element and the second network element.
a second transmission unit 503, configured to transmit a heartbeat packet to the second network element, where the heartbeat packet is used to detect connectivity of the link.

For example, the heartbeat packet may be construed as a packet that is continuously transmitted at particular a frequency. During the period of transmitting the heartbeat packet, the connectivity of the link between the first network element and the second network element may be continuously detected by the apparatus 500 for detecting connectivity.

As can be learned from the foregoing embodiment, after an SDN device that is located in an SDN network transmits a session negotiation packet to a second network element to determine that a link between the second network element and the first network element located in the SDN network is negotiated successfully, the SDN device transmits a heartbeat packet to the second network element, so as to effectively detect connectivity of the link. In this case, in an SDN network architecture or a hybrid architecture having an SDN network architecture, link connectivity between a first network element and a second network element in the SDN can also be effectively detected, thereby improving compatibility of the SDN network, and facilitating promotion of the SDN network.

The software-defined networking, SDN, device, for detecting connectivity may also have multiple connectivity detection cases. Several specific possibilities of the SDN device, for detecting connectivity are described in this embodiment of the present invention in detail.

In a first case, before the first transmission unit 501 is triggered,
the receiving unit 502 is further configured to receive first configuration information transmitted by an SNC, where the first configuration information includes location information of the second network element, and the first network element is connected to the SNC; and
the first transmission unit 501 is specifically configured to transmit the session negotiation packet to the second network element according to the location information.

For example, the first configuration information can be used to determine a location of a target network element whose connectivity is to be detected, that is, the second network element, in the network.

For example, frequency and duration of the heartbeat packet transmitted by the second transmission unit 503 to the second network element may be set according to the first configuration information. Optionally, the first configuration information further includes data for transmitting the heartbeat packet, and the data includes a transmission interval and/or transmission times of the heartbeat packet. When the first configuration information received by the receiving unit 502 includes the data, the second transmission unit 503 is specifically configured to transmit the heartbeat packet to the second network element according to the data included in the first configuration information.

In a second case, on the basis of the embodiment corresponding to FIG. 5, after the second transmission unit 503 is triggered, the SDN device, for detecting connectivity further includes a third transmission unit 504. As shown in FIG. 6, FIG. 6 is a structural diagram of the SDN device for detecting connectivity according to an embodiment of the present invention:
the third transmission unit 504 is configured to transmit a notification message to the first network element, where the notification message includes a connectivity result of the link detected by using the heartbeat packet.

For example, because the connectivity result of the link obtained by transmitting the heartbeat packet to the second network element is not known by the first network element, the third transmission unit 504 may inform the first network element of the connectivity result of the link by transmitting the notification message to the first network element.

In a third case, before the second transmission unit 503 is triggered.
the receiving unit 502 is further configured to receive second configuration information transmitted by the SNC, where the second configuration information includes location information of the second network element and data for transmitting the heartbeat packet, and the data includes a transmission interval and/or transmission times of the heartbeat packet.

For example, both the data for transmitting the heartbeat packet by the second transmission unit 503 to the second network element and address information of the second network element can be obtained by means of the second configuration information.

The second transmission unit 503 is specifically configured to transmit the heartbeat packet to the second network element according to the configuration information and the data.

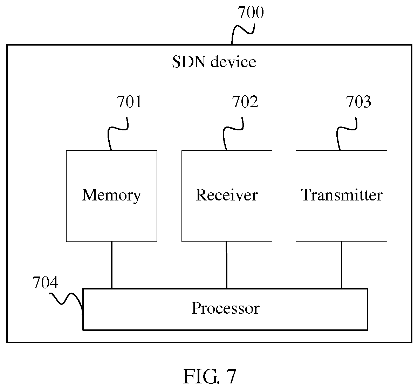

Refer to FIG. 7. FIG. 7 is a schematic structural diagram of hardware in an SDN device according to an embodiment of the present invention. The SDN device 700 includes a memory 701, a receiver 702, a transmitter 703, and a processor 704 connected to the memory 701, the receiver 702 and the transmitter 703. The memory 701 is configured to store a group of program instructions, and the processor 704 is configured to invoke the program instructions stored in the memory 701 to perform the following operations:
triggering the transmitter 703 to transmit a session negotiation packet to a second network element, where the session negotiation packet is used to negotiate a link between the first network element and the second network element, and the first network element is located in an SDN network;
triggering the receiver 702 to obtain a response message returned by the second network element, to determine that the link is negotiated successfully; and
triggering the transmitter 703 to transmit a heartbeat packet to the second network element, where the heartbeat packet is used to detect connectivity of the link.

Optionally, the processor 704 may be a central processing unit (Central Processing Unit, CPU), the memory 701 may be an internal memory of a random access memory (Random Access Memory, RAM) type, the receiver 702 and the transmitter 703 each may include a common physical interface, and the physical interface may be an Ethernet (Ethernet) interface or an asynchronous transfer mode (Asynchronous Transfer Mode, ATM) interface. The processor 704, the transmitter 703, the receiver 702, and the memory 701 may be integrated into one or more independent circuits or one or more pieces of hardware, for example, an application specific integrated circuit (Application Specific Integrated Circuit, ASIC).

The term "first" in the first network element and first configuration information mentioned in the embodiments of the present invention is only used as a name identifier but does not necessarily represent a first place in terms of sequence. This rule is also applicable to "second".

Persons of ordinary skill in the art may understand that all or a part of the steps of the method in the embodiments of the present invention may be implemented by a program instructing relevant hardware. The program may be stored in a computer readable storage medium. When the program runs, the steps of the method in the embodiments of the present invention are performed. The storage medium may be at least one of the following media: media that are capable of storing program code, such as a Read-Only Memory (read-only memory, ROM for short), a RAM, a magnetic disk, or an optical disc.

It should be noted that the embodiments in this specification are all described in a progressive manner, for same or similar parts in the embodiments, reference may be made to these embodiments, and each embodiment focuses on a difference from other embodiments. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments of the present invention without creative efforts.

The foregoing descriptions are merely preferred embodiments of the present invention, but are not intended to limit the protection scope of the present invention. The protection scope of the present invention is defined by the appended claims.

## Claims

1. A method for detecting connectivity between a first network element and a second network element, wherein the first network element is located in a software-defined networking, SDN, network comprising an SDN device and wherein the second network element may or may not be located in the SDN network, the method comprising:
transmitting (S101), by an SDN device, a session negotiation packet to a second network element, wherein the session negotiation packet is used to negotiate a link between the first network element and the second network element;
obtaining (S102, S203), by the SDN device, a response message returned by the second network element to determine that the link is negotiated successfully; and
transmitting (S103, S204), by the SDN device, a heartbeat packet to the second network element, wherein the heartbeat packet is used to detect connectivity of the link,
wherein the SDN device comprises the first network element, and before the transmitting, by the SDN device, of said session negotiation packet to said second network element, the method further comprises:
receiving (S201), by the first network element, first configuration information transmitted by a software defined networking controller, SNC, wherein the first configuration information comprises location information of the second network element, and the first network element is connected to the SNC; and
wherein the session negotiation packet transmitted to the second network element is transmitted, by the first network element of the SDN device, according to the location information (S202).

2. The method according to claim 1, wherein the first configuration information further comprises data for transmitting the heartbeat packet, and the data comprises a transmission interval and/or transmission times of the heartbeat packet; and
wherein the heartbeat packet transmitted to the second network element is transmitted, by the first network element of the SDN device, according to the data in the configuration information.

3. A software-defined networking, SDN, device (500) for detecting connectivity between a first network element and a second network element, wherein the first network element is located in a software-defined networking, SDN, network comprising the SDN device, and wherein the second network element may or may not be located in the SDN network, the apparatus comprising:
the SDN device configured to transmit a session negotiation packet to a second network element, wherein the session negotiation packet is used to negotiate a link between the first network element and the second network element;
a receiving unit (502), configured to obtain a response message returned by the second network element to determine that the link is negotiated successfully; and
a second transmission unit (503), configured to transmit a heartbeat packet to the second network element, wherein the heartbeat packet is used to detect connectivity of the link.
wherein the SDN device comprises the first network element and before the transmitting, by the SDN device, of said session negotiating packet to said second network element, the first element is configured to receive first configuration information transmitted, by a software defined networking controller, SNC, wherein the first configuration information comprises location information of the second network element, and the first network element is connected to the SNC; and
wherein the first network element of the SDN device is configured to transmit the session negotiation packet to the second network element according to the location information.

4. The apparatus according to claim 3, wherein the first configuration information further comprises data for transmitting the heartbeat packet, and the data comprises a transmission interval and/or transmission times of the heartbeat packet; and
the second transmission unit is configured to transmit the heartbeat packet to the second network element according to the data in the configuration information.

## Patentansprüche

1. Verfahren zum Konnektivitätskennen zwischen einem ersten Netzwerkelement und einem zweiten Netzwerkelement, wobei sich das erste Netzwerkelement in einem Netzwerk mit softwaredefinierter Vernetzung (software-defined networking, SDN) befindet, umfassend eine SDN-Vorrichtung, und wobei sich das zweite Netzwerkelement in dem SDN-Netzwerk befinden kann oder nicht, wobei das Verfahren Folgendes umfasst:
Übertragen (S101) eines Sitzungsverhandlungspakets an ein zweites Netzwerkelement durch eine SDN-Vorrichtung, wobei das Sitzungsverhandlungspaket dazu verwendet wird, eine Verbindung zwischen dem ersten Netzwerkelement und dem zweiten Netzwerkelement zu verhandeln;
Erlangen (S102, S203) einer Antwortnachricht, die durch das zweite Netzwerkelement zurückgegeben wird, durch die SDN-Vorrichtung, um zu bestimmen, dass die Verbindung erfolgreich verhandelt ist; und
Übertragen (S103, S204) eines Herzschlagpakets an das zweite Netzwerkelement durch die SDN-Vorrichtung, wobei das Herzschlagpaket dazu verwendet wird, die Konnektivität der Verbindung zu kennen,
wobei die SDN-Vorrichtung das erste Netzwerkelement umfasst, und vor dem Übertragen des Sitzungsverhandlungspakets an das zweite Netzwerkelement durch die SDN-Vorrichtung, das Verfahren ferner Folgendes umfasst:
Empfangen (S201) von ersten Konfigurationsinformationen, die durch eine Steuerung mit softwaredefinierter Vernetzung (software defined networking controller, SNC), übertragen werden, durch das erste Netzwerkelement, wobei die ersten Konfigurationsinformationen Standortinformationen des zweiten Netzwerkelements umfassen und das erste Netzwerkelement mit der SNC verbunden ist; und
wobei das Sitzungsverhandlungspaket, das an das zweite Netzwerkelement übertragen wird, durch das erste Netzwerkelement der SDN-Vorrichtung gemäß den Standortinformationen (S202) übertragen wird.

2. Verfahren gemäß Anspruch 1, wobei die ersten Konfigurationsinformationen ferner Daten zum Übertragen des Herzschlagpakets umfassen und die Daten ein Übertragungsintervall und/oder Übertragungszeiten des Herzschlagpakets umfassen; und
wobei das Herzschlagpaket, das an das zweite Netzwerkelement übertragen wird, durch das erste Netzwerkelement der SDN-Vorrichtung gemäß den Daten in den Konfigurationsinformationen übertragen wird.

3. Vorrichtung (500) mit softwaredefinierter Vernetzung, SDN, zum Konnektivitätskennen zwischen einem ersten Netzwerkelement und einem zweiten Netzwerkelement, wobei sich das erste Netzwerkelement in einem Netzwerk mit softwaredefinierter Vernetzung, SDN, befindet, umfassend die SDN-Vorrichtung, und wobei sich das zweite Netzwerkelement in dem SDN-Netzwerk befinden kann oder nicht, wobei das Gerät Folgendes umfasst:
die SDN-Vorrichtung, die dazu konfiguriert ist, ein Sitzungsverhandlungspaket an ein zweites Netzwerkelement zu übertragen, wobei das Sitzungsverhandlungspaket dazu verwendet wird, eine Verbindung zwischen dem ersten Netzwerkelement und dem zweiten Netzwerkelement zu verhandeln;
eine Empfangseinheit (502), die dazu konfiguriert ist, eine Antwortnachricht zu erlangen, die durch das zweite Netzwerkelement zurückgegeben wird, um zu bestimmen, dass die Verbindung erfolgreich verhandelt ist; und
eine zweite Übertragungseinheit (503), die dazu konfiguriert ist, ein Herzschlagpaket an das zweite Netzwerkelement zu übertragen, wobei das Herzschlagpaket dazu verwendet wird, die Konnektivität der Verbindung zu kennen,
wobei die SDN-Vorrichtung das erste Netzwerkelement umfasst und das erste Element vor dem Übertragen des Sitzungsverhandlungspakets an das zweite Netzwerkelement durch die SDN-Vorrichtung dazu konfiguriert ist, erste Konfigurationsinformationen zu empfangen, die durch eine Steuerung mit softwaredefinierter Vernetzung, SNC, übertragen werden, wobei die ersten Konfigurationsinformationen Standortinformationen des zweiten Netzwerkelements umfassen und das erste Netzwerkelement mit der SNC verbunden ist; und
wobei das erste Netzwerkelement der SDN-Vorrichtung dazu konfiguriert ist, das Sitzungsverhandlungspaket an das zweite Netzwerkelement gemäß den Standortinformationen zu übertragen.

4. Gerät gemäß Anspruch 3, wobei die ersten Konfigurationsinformationen ferner Daten zum Übertragen des Herzschlagpakets umfassen und die Daten ein Übertragungsintervall und/oder Übertragungszeiten des Herzschlagpakets umfassen; und
wobei die zweite Übertragungseinheit dazu konfiguriert ist, das Herzschlagpaket an das zweite Netzwerkelement gemäß den Daten in den Konfigurationsinformationen zu übertragen.

## Revendications

1. Procédé de détection de connectivité entre un premier élément de réseau et un second élément de réseau, dans lequel le premier élément de réseau est situé dans un réseau de mise en réseau définie par logiciel, SDN, comprenant un dispositif SDN et dans lequel le second élément de réseau peut ou peut ne pas être situé dans le réseau SDN, le procédé comprenant :
la transmission (S101), par un dispositif SDN, d'un paquet de négociation de session à un second élément de réseau, dans lequel le paquet de négociation de session est utilisé pour négocier une liaison entre le premier élément de réseau et le second élément de réseau ;
l'obtention (S102, S203), par le dispositif SDN, d'un message de réponse renvoyé par le second élément de réseau pour déterminer que la liaison est négociée avec succès ; et
la transmission (S103, S204), par le dispositif SDN, d'un paquet de pulsation au second élément de réseau, dans lequel le paquet de pulsation est utilisé pour détecter une connectivité de la liaison,
dans lequel le dispositif SDN comprend le premier élément de réseau, et avant la transmission, par le dispositif SDN, dudit paquet de négociation de session audit second élément de réseau, le procédé comprend également :
la réception (S201), par le premier élément de réseau, de premières informations de configuration transmises par un dispositif de commande de mise en réseau définie par logiciel, SNC, dans lequel les premières informations de configuration comprennent des informations de localisation du second élément de réseau, et le premier élément de réseau est connecté au SNC ; et
dans lequel le paquet de négociation de session transmis au second élément de réseau est transmis, par le premier élément de réseau du dispositif SDN, selon les informations de localisation (S202).

2. Procédé selon la revendication 1, dans lequel les premières informations de configuration comprennent également des données pour la transmission du paquet de pulsation, et les données comprennent un intervalle de transmission et/ou des temps de transmission du paquet de pulsation ; et
dans lequel le paquet de pulsation transmis au second élément de réseau est transmis, par le premier élément de réseau du dispositif SDN, selon les données dans les informations de configuration.

3. Dispositif de mise en réseau définie par logiciel, SDN, (500) de détection de connectivité entre un premier élément de réseau et un second élément de réseau, dans lequel le premier élément de réseau est situé dans un réseau de mise en réseau définie par logiciel, SDN, comprenant le dispositif SDN et dans lequel le second élément de réseau peut ou peut ne pas être situé dans le réseau SDN, l'appareil comprenant :
le dispositif SDN configuré pour transmettre un paquet de négociation de session à un second élément de réseau, dans lequel le paquet de négociation de session est utilisé pour négocier une liaison entre le premier élément de réseau et le second élément de réseau ;
une unité de réception (502), configurée pour obtenir un message de réponse renvoyé par le second élément de réseau pour déterminer que la liaison est négociée avec succès ; et
une seconde unité de transmission (503), configurée pour transmettre un paquet de pulsation au second élément de réseau, dans lequel le paquet de pulsation est utilisé pour détecter une connectivité de la liaison.
dans lequel le dispositif SDN comprend le premier élément de réseau et avant la transmission, par le dispositif SDN, dudit paquet de négociation de session audit second élément de réseau, le premier élément est configuré pour recevoir des premières informations de configuration transmises, par un dispositif de commande de mise en réseau définie par logiciel, SNC, dans lequel les premières informations de configuration comprennent des informations de localisation du second élément de réseau, et le premier élément de réseau est connecté au SNC ; et
dans lequel le premier élément de réseau du dispositif SDN est configuré pour transmettre le paquet de négociation de session au second élément de réseau selon les informations de localisation.

4. Appareil selon la revendication **3,** dans lequel les premières informations de configuration comprennent également des données pour la transmission du paquet de pulsation, et les données comprennent un intervalle de transmission et/ou des temps de transmission du paquet de pulsation ; et
la seconde unité de transmission est configurée pour transmettre le paquet de pulsation au second élément de réseau selon les données dans les informations de configuration.
